(19) Europäisches Patentamt

European Patent Office

Office européen des brevets

(11) **EP 1 059 684 B1**

## (12) EUROPEAN PATENT SPECIFICATION

(45) Date of publication and mention
of the grant of the patent:
**21.08.2002   Bulletin 2002/34**

(51) Int Cl.[7]: **H01M 4/38**

(21) Application number: **00111864.5**

(22) Date of filing: **08.06.2000**

(54) **Process for producing a hydrogen absorbing alloy, and hydrogen absorbing alloy electrodes**

Verfahren zur Herstellung einer Wasserstoff-absorbierenden Legierung und Elektroden aus einer Wasserstoff-absorbierenden Legierung

Procédé pour la fabrication d'un alliage absorbant l'hydrogène et electrodes en alliage absorbant l'hydrogène

(84) Designated Contracting States:
**DE FR GB**

(30) Priority:  **09.06.1999   JP   16174599**

(43) Date of publication of application:
**13.12.2000   Bulletin 2000/50**

(73) Proprietor: **Shin-Etsu Chemical Co., Ltd.
Chiyoda-ku Tokyo 100 (JP)**

(72) Inventors:
 • **Shinya, Naofumi, Magnetic Materials Res. & Dev.
Takefu, Fukui-ken (JP)**
 • **Shima, Satoshi, Magnetic Materials Res. & Dev.
Takefu, Fukui-ken (JP)**

(74) Representative:
**Wibbelmann, Jobst, Dr., Dipl.-Chem.
Wuesthoff & Wuesthoff,
Patent- und Rechtsanwälte,
Schweigerstrasse 2
81541 München (DE)**

(56) References cited:
 • **HIGASHIYAMA N ET AL: "Influence of preparation methods of non-stoichiometric hydrogen-absorbing alloys on the performance of nickel-metal hydride secondary batteries" JOURNAL OF ALLOYS AND COMPOUNDS,CH,ELSEVIER SEQUOIA, LAUSANNE, vol. 253-254, 20 May 1997 (1997-05-20), pages 648-651, XP004126648 ISSN: 0925-8388**
 • **PATENT ABSTRACTS OF JAPAN vol. 1996, no. 10, 31 October 1996 (1996-10-31) -& JP 08 143993 A (SHIN ETSU CHEM CO LTD), 4 June 1996 (1996-06-04)**

**Description**

**BACKGROUND OF THE INVENTION**

1. Field of the invention

This invention relates to hydrogen absorbing alloy electrodes formed by using a hydrogen absorbing alloy powder suitable for use in the negative electrodes of alkaline storage batteries. More particularly, it relates to a hydrogen absorbing alloy powder suitable for use in nickel-metal hydride batteries which has excellent cycle characteristics and high rate discharge property.

2. Description of the related art

Since the discovery of hydrogen absorbing alloys capable of absorbing and desorbing hydrogen, their application has been positively developed. In particular, alkaline storage batteries using a hydrogen absorbing alloy for the negative electrode have already been put to practical use, and various attempts have successively been made to improve the hydrogen absorbing alloys used therefor.

While the initially investigated $LaNi_5$ alloy (Japanese Patent Provisional Publication No. 51-13934) has the advantage of being able to absorb a large amount of hydrogen, it has several disadvantages in that metallic La is expensive, the repeated absorption and release of hydrogen tends to cause a reduction in particle size, and the alloy is easily corroded by an alkaline or acid solution. Consequently, when the aforesaid hydrogen absorbing alloy is used in alkaline storage batteries, the initial electric capacity is high, but the electric capacity is reduced to less than half after the charge-discharge cycle has been repeated 50 times or more. Thus, these batteries have the disadvantage that they cannot be used for a long period of time.

These disadvantages have been overcome by $LaNi_5$ type hydrogen absorbing alloys in which misch metal (hereinafter abbreviated as "Mm") formed by replacing part of La with Ce, Pr, Nd and other rare earth elements is used, or in which part of Ni is replaced with a metal such as Co, Al or Mn. These hydrogen absorbing alloys are disclosed in Japanese Patent Provisional Publication Nos. 53-48918, 54-64014, 60-250558, 61-91862 and 61-233969.

The hydrogen absorbing alloys using Mm has the advantage that Mm is inexpensive. However, in recent years when the range of their use is expanding, more excellent high rate discharge property has come to be required.

High rate discharge property cannot be improved simply by the use of Mm. In order to improve high rate discharge property, it has been conventional practice to subject the alloy powder to a surface treatment with an alkali or the like, plate the alloy powder with metal, or add B, Mo or the like to the alloy. However, mere surface treatments with an alkali or acid, and the addition of elements other than the constituent elements are disadvantageous in that they make it difficult to maintain the activity of the alloy surface.

Moreover, one of the major concerns about Ni-metal hydride batteries for EV applications is cost. Thus, it is an important problem to cut down the costs of battery materials.

The present inventors made intensive investigations on the above-described disadvantages and have now found that, although conventional $LaNi_5$ type hydrogen absorbing alloys have been improved by replacing part of La with Ce and with Pr and/or Nd to enhance their corrosion resistance, it is essential to control the B/A ratio in an intermetallic compound $AB_5$ for the purpose of improving its high rate discharge property. Moreover, in order to cut down the cost of a hydrogen absorbing alloy, the present inventors have also addressed the problem of reducing its Co content.

However, when the intermetallic compound $AB_5$ is simply made B-rich by increasing the B/A ratio, its corrosion resistance and high rate discharge property are improved, but its capacity is reduced and this makes it difficult of increase the capacity of the battery. Moreover, the particle size reduction of the alloy proceeds owing to a reduced Co content.

In the case of an alloy prepared by a conventional melt casting method, the particle size reduction of the alloy may be suppressed to some extent by increasing the B/A ratio and thereby making it B-rich. However, if the B/A ratio is unduly high, the degree of particle size reduction will be increased on the contrary. The reason for this is considered to be that the actual alloy composition deviates from the stoichiometric ratio of the desired alloy and, in consequence, the constituent elements on the B side (in particular, Mn, Al and the like) precipitates at grain boundaries as a second phase and accelerates particle size reduction.

SUMMARY OF THE INVENTION

Accordingly, a first object of the present invention is to provide an inexpensive hydrogen absorbing alloy powder suitable for use in nickel metal-hydride secondary batteries which has excellent high rate discharge property.

A second object of the present invention is to provide a hydrogen absorbing alloy powder suitable for use in a nickel metal-hydride secondary battery which not only meets the requirements of the first object, but also has a high capacity and a long charge-discharge cycle life.

The present invention provides a process for the production of a hydrogen absorbing alloy comprising a $LaNi_5$ type intermetallic compound having a stoichiometric ratio represented by the formula

$$R_{0.83-0.96}Ni_5$$

wherein R is a combination of rare earth elements and contains 70 to 95% by weight of La and 5 to 30% by weight of Ce, and when the sum of La and Ce is less than 100% by weight, R further contains Pr and/or Nd; and the subscript "0.83-0.96" means an atomic ratio of 0.83 to 0.96, the intermetallic compound being such that part of Ni may be replaced with Co, Mn or Al, and when part of Ni is replaced with Co, 12% or less of Ni is replaced with the corresponding atomic ratio of Co, the process including the step of quenching a molten mixture of constituent metal rapidly by rapid roll quenching or atomization to obtain a solidified hydrogen absorbing alloy. It has been found that this process can produce an inexpensive alloy having a high capacity and a long life (by virtue of the fact that, in spite of its B-rich composition, the precipitation of a second phase is suppressed to yield an alloy less liable to particle size reduction), as well as excellent high rate discharge property.

Moreover, it has also be found that, when an oxide or hydroxide of a metal having a lower oxidation-reduction potential than Co or Ni is formed on the surface of the hydrogen absorbing alloy powder and this alloy surface is further treated, the oxidation of the resulting Ni or Co layer can be prevented to achieve an improvement in high rate discharge property. The present invention has been completed on the basis of these findings.

The present invention relates to a process for the production of a hydrogen absorbing alloy comprising a $LaNi_5$ type intermetallic compound characterized not only in that, in the $LaNi_5$ alloy composition, 5 to 30% by weight of La is replaced with Ce and with Pr and/or Nd, but also in that, in its stoichiometric ratio represented by the formula $R_{0.83-0.96}Ni_5$, (in which R is a combination of rare earth elements and contains 70 to 95% by weight of La and 5 to 30% by weight of Ce, and when the sum of La and Ce is less than 100% by weight, R further contains Pr and/or Nd), 12% or less of Ni is replaced with Co. According to this process, an alloy melt is rapidly quenched by rapid roll quenching or atomization to obtain a solidified hydrogen absorbing alloy, so that storage batteries having a high capacity, a long life and excellent high rate discharge property can be yielded. Moreover, an oxide or hydroxide of a metal having a lower oxidation-reduction potential than Co or Ni may be formed on the surface of the hydrogen absorbing alloy so as to have the form of islands. This prevents the activity of the alloy surface from being deteriorated by an alkaline electrolyte and can hence yield storage batteries having excellent high rate discharge property.

DETAILED DESCRIPTION OF THE PREFERRED EMBODIMENTS

In the process of the present invention for the production of a hydrogen absorbing alloy comprising a $LaNi_5$ type intermetallic compound having a stoichiometric ratio represented by the formula

$$R_{0.83-0.96}Ni_5$$

wherein R is a combination of rare earth elements and contains 70 to 95% by weight of La and 5 to 30% by weight of Ce, and when the sum of La and Ce is less than 100% by weight, R further contains Pr and/or Nd, the intermetallic compound being such that part of Ni may be replaced with Co, Mn and/or Al, and when part of Ni is replaced with Co, 12% or less of Ni is replaced with the corresponding atomic ratio of Co, a molten mixture of constituent metals is rapidly cooled by roll chilling or atomization (e.g., gas atomization or disk atomization) to obtain a solidified hydrogen absorbing alloy. Thus, a hydrogen absorbing alloy powder is obtained by subjecting the solidified hydrogen absorbing alloy to mechanical pulverization or fracturing by hydrogen absorption, or a hydrogen absorbing alloy powder is directly obtained by atomization.

The $AB_5$ alloy of the present invention is made B-rich as can be seen from a stoichiometric ratio represented by the formula $R_{0.83-0.96}Ni_5$. In this formula, R is a combination of rare earth elements and contains 70 to 95% by weight of La and 5 to 30% by weight of Ce, preferably 80 to 95% by weight of La and 5 to 20% by weight of Ce. Thus, this alloy shows an improvement in high rate discharge property and single-electrode capacity and exhibits a prolonged life.

When R contains one of Pr and Nd, the Pr or Nd is preferably present in an amount of not greater than 25% by weight based on the weight of R, and when R contains both of Pr and Nd, the Pr and Nd are preferably present in a combined amount of not greater than 25% by weight based on the weight of R.

Moreover, when the composition of the rare earth moiety comprises a binary system consisting of La and a rare earth element other than La, an improvement in high rate discharge property is achieved.

According to the present invention, part of Ni constituting the moiety B may be replaced with Co, Mn and/or Al. When part of Ni is replaced with Co, more economical alloy can be obtained by replacing 12 atomic percent or less of Ni with Co. In addition to the above-described element replacement, part of Ni may further be replaced with Fe, Cu and/or Zr.

In order to improve the life characteristics of batteries on the Ni side, it is preferably 2 to 12 atomic percent, more preferably 6 to 12 atomic percent, of Ni is replaced with Co. Moreover, according to the present invention in which the alloy composition is made B-rich ($R_{0.83-0.96}Ni_5$) and an alloy melt having that composition is solidified by rapid cooling, it is possible to suppress the particle size reduction of the alloy and achieve a long life even in compositions having a low content of Co on the Ni side. Furthermore, part of Ni may be replaced with Al, Mn, Fe, Cu and/or Zr in a combined amount of 10 to 20 atomic percent.

In the practice of the present invention, using a high-frequency melting furnace or an arc melting furnace, a mixture of metallic elements having the above-described composition is melted at a temperature above the melting point of the alloy in an atmosphere of an inert gas such as argon or helium. Then, the resulting melt is rapidly cooled and thereby solidified to obtain a hydrogen absorbing alloy in accordance with the present invention.

In the rapid quenching step of the present invention, the melt may be rapidly cooled and solidified according to a rapid cooling method such as rapid roll quenching or atomization (e.g., gas atomization or centrifugal atomization).

Subsequently, the hydrogen absorbing alloy may be heat-treated at a temperature of 400 to 1,200°C for 3 to 20 hours in a vacuum or in an atmosphere of an inert gas. Thereafter, the hydrogen absorbing alloy may optionally be subjected to mechanical pulverization in an inert gas by means of a ball mill or the like, or to fracturing by hydrogen absorption. Thus, there is obtained a hydrogen absorbing alloy powder having a desired particle diameter.

In the present invention, it is undesirable to employ the conventional in-mold casting method (slow cooling) for the purpose of solidifying an alloy melt having the above-described composition, because this alloy composition is liable to segregation.

Furthermore, according to the present invention, an oxide or hydroxide of a metal having a lower oxidation-reduction potential than Co or Ni is formed on the alloy surface so as to have the form of islands. As a specific means therefor, it is preferable to add an oxide or hydroxide of a metal having a lower oxidation-reduction potential than Co or Ni to the hydrogen absorbing alloy powder produced by the process of the present invention, blending this mixture according to a wet or dry blending technique, and then subjecting the alloy powder to a surface treatment. However, metal oxides may be caused to grow on the alloy surface, instead of adding them.

According to a wet blending technique, water, hexane, acetone or the like, together with the oxide or hydroxide, is added to the alloy powder, and the resulting mixture is blended by stirring. According to a dry blending technique, the oxide or hydroxide is added to and mixed with the stirred alloy powder in an inert gas (e.g., argon) or a vacuum. In both of the aforesaid techniques, the stirring may be continued for 0.1 to 2 hours.

The surface treatment after the addition of the metal oxide or hydroxide is carried out by heat-treating the alloy powder having the metal oxide or hydroxide attached to the alloy surface at a temperature of 100 to 800°C in an inert gas or a vacuum so as to cause the metal oxide or hydroxide to adhere firmly to the alloy surface.

In the method for causing metal oxides to grow, the alloy powder is heat-treated at a temperature of 100 to 800°C in an inert gas or a vacuum so as to oxidize the alloy surface selectively and thereby cause oxides of rare earth elements (La, Ce, Pr, Nd, etc.) to grow on the alloy surface.

The metal oxide or hydroxide added is an oxide or hydroxide of a metal selected from Fe, Mn and rare earth elements which have lower oxidation-reduction potentials than Co or Ni. Preferably, an oxide or hydroxide of Y, La, Ce, Pr, Nd, Gd, Dy, Ho, Er or Yb is used. More preferably, an oxide or hydroxide of Gd, Dy, Ho, Er or Yb is used.

The use of an oxide or hydroxide of a metal having a higher oxidation-reduction potential than Co or Ni is undesirable because this promotes the dissolution of Co and Ni.

The amount of oxide or hydroxide added is preferably in the range of 0.1 to 10% by weight, more preferably 0.1 to 2.0% by weight, based on the weight of the hydrogen absorbing alloy. If the amount of oxide or hydroxide added is less than 0.1% by weight, the corrosion resistance and hydrogen absorption-release cycle life of the alloy used for hydrogen absorbing purposes may not be satisfactorily improved. If it is greater than 10% by weight, the contact between alloy particles may become poor to cause a reduction in thermal conductivity and electrical conductivity, and the product cost may be unduly increased.

Both an oxide and a hydroxide may be used in combination. In this case, their combined amount may be in the aforesaid range.

Alternatively, the alloy of the present invention may also be obtained by treating an alloy powder according to a dry process. Specifically, this can be accomplished, for example, by heat-treating an untreated alloy powder, with or without the addition of a metal oxide or hydroxide, at a temperature of 100 to 800°C (preferably 200 to 500°C); by treating an alloy metal with an acid (e.g., HF or HCl) in a gaseous phase and then heating it at a temperature of 100 to 800°C (preferably 200 to 500°C) in an atmosphere of Ar-$O_2$ or Ar-$H_2O$; or by subjected an alloy powder to dry plating.

In the resulting alloy powder of the present invention, the oxides and/or hydroxides or the like of Fe, Mn and rare earth elements are present on the alloy surface so as to have the form of islands.

The hydrogen absorbing alloy powder of the present invention may be formed into electrodes with the aid of a binder. Although no particular limitation is placed on the type of the binder, it may be suitably selected from among polyvinyl alcohol; cellulose derivatives such as methylcellulose and carboxymethylcellulose; and organic binders such as PTPE, polyethylene oxide and high polymer latices. These binders may be used in admixture of two or more. The amount of binder used is in the range of 0.1 to 20% by weight based on the weight of the alloy powder.

In the practice of the present invention, a mixture of the alloy powder and the binder is applied to an electrically conducting support. Although no particular limitation is placed on the type of the electrically conducting support, it may be suitably selected from among electrically conducting three-dimensional supports such as fibrous nickel and foamed nickel; and electrically conducting two-dimensional supports such as punching metals.

Thus, the hydrogen absorbing alloy electrodes of the present invention may be formed, for example, by adding the hydrogen absorbing alloy powder of the present invention to an aqueous solution containing a binder as described above, kneading this mixture into a paste, applying this paste to a surface of an electrically conducting support, and drying and pressing this assembly. Alternatively, they may also be formed by making the aforesaid paste into a sheet, and press-bonding it to a surface of an electrically conducting support.

The present invention is further illustrated by the following examples. However, these examples are not to be construed to limit the scope of the invention.

Examples 1-4 and Comparative Examples 1-8

For 0.83 to 1.00 (atomic ratio) of R composed of 85% by weight of La and 15% by weight of Ce (i.e., obtained by replacing 15% by weight of La with Ce), Ni, Co, Mn and Al were weighed out so as to give atomic ratios of 4.30, 0.20 (4% of Co based on Ni), 0.20 and 0.30, respectively. These raw materials were melted in a high-frequency melting furnace, and the resulting melt was roll-chilled (with a chill roll made of copper and having a diameter of 40 cm). Thus, there were obtained a series of $LaNi_5$ type alloys. For purposes of comparison, comparative alloys were also prepared by mixing raw materials in the same proportions, melting this mixture in a high-frequency melting furnace, and subjecting the resulting melt to ordinary casting.

The roll-chilled alloys were heat-treated at 800°C for 5 hours in an atmosphere of Ar, whereas the ordinarily case alloys were heat-treated at 1,000°C for 5 hours in an atmosphere of argon gas. Thereafter, they were pulverized to an average particle diameter of about 40 μm.

16 g of each of the hydrogen absorbing alloy powders thus obtained was mixed with 4 g of a 3 wt% aqueous solution of PVA (with an average degree of polymerization (P) of 2,000 and a degree of saponification of 98 mole %) to prepare a paste. This paste was uniformly filled into a porous body of foamed nickel having a porosity of 95% by volume, and then pressed into a sheet having a thickness of 0.5-1.0 mm. Finally, the negative electrode was completed by attaching a lead wire thereto.

As the positive electrode, a conventional foamed metal type nickel electrode having a capacity of 2,400 mAh was used.

Each of the sheetlike negative electrodes formed in the above-described manner was placed on the positive electrode with a hydrophilized polypropylene nonwoven fabric separator interposed therebetween. This assembly was wound in the conventional manner and placed in a cylindrical vessel, into which an electrolyte comprising a 6N aqueous solution of KOH was poured. Thereafter, the vessel was sealed to construct a closed type nickel metal-hydride secondary battery of SC size.

At a constant temperature of 20°C, this battery was charged at 720 mA for 4 hours, and then discharged at 480 mA until the battery voltage reached 1.0 V. After this cycle was repeated ten times, the discharge capacity was measured. Next, in order to investigate the high rate discharge property, at a temperature of 20°C, this battery was charged at 720 mA for 4 hours and then discharged at 2,400 mA until the battery voltage reached 1.0 V. The discharge capacity at a discharge rate of 0.3C is referred to as "720 mA discharge capacity", and the discharge capacity at a discharge rate of 1.0C as "2,400 mA discharge capacity".

Moreover, this battery was subjected to a charge-discharge cycle test in which, at a temperature of 20°C, the battery was charged at 720 mA for 4 hours and then discharged at 480 mA until the battery voltage reached 1.0 V. This charge-discharge cycle was repeated, and the number of cycles at which its capacity became equal to 60% of the initial capacity (maximum capacity) was regarded as "cycle life".

Furthermore, in order to test single-electrode capacity, 2 g of each alloy powder was mixed with 0.5 g of a 3 wt% aqueous solution of polyvinyl alcohol to prepare a paste. A predetermined amount of this paste was uniformly filled into a porous body of foamed nickel (measuring 30 mm x 40 mm x 1.6 mm (thickness)) having a porosity of 95%, dried, and then pressed. Thus, six different negative electrodes were formed.

Then, an open nickel metal-hydride secondary battery of the negative electrode regulation type was constructed by using each of the aforesaid negative electrodes in combination with a nickel oxide positive electrode comprising a sintered nickel electrode formed in the well-known manner, a separator comprising a polyolefin (polypropylene) nonwoven fabric, and an electrolyte comprising a 6N aqueous solution of KOH. In addition, the charged positive electrode was used as a reference electrode so that the positive electrode may exert no influence.

At a constant temperature of 20°C, the battery so constructed was charged at a charge rate of 180 mA for 5 hours, and then discharged at a discharge rate of 120 mA until the battery voltage reached 0.8 V. After this cycle was repeated twenty times, the discharge capacity (maximum capacity) was measured. This discharge capacity was regarded as "single-electrode capacity".

With respect to "retention of particle size", the alloy having undergone the single-electrode capacity test was ultrasonically dispersed and subjected to particle size determination. The particle size so determined was compared with the particle size before testing. The retention of particle size was calculated according to the following equation.

$$\text{Retention of particle size} = \frac{\text{(Alloy particle size after 20 cycles)}}{\text{(Particle size before testing)}}$$

Examples 5-7 and Comparative Examples 9-10

For 0.90 of R in which 0, 10, 20, 30 or 40% by weight of La was replaced with Ce, Ni, Co, Mn and Al were weighed out so as to give atomic ratios of 3.90, 0.40 (8% of Co based on Ni), 0.40 and 0.30, respectively. These raw materials were melted in the same manner as in Example 1, and the resulting melt was subjected to atomization (i.e., disk atomization with a copper disk having a diameter of 35 mm). Thus, there were obtained a series of alloy powders having an average particle diameter of about 50 $\mu$m. Then, 1.0 part by weight of $Yb_2O_3$ was added to 100 parts by weight of each alloy powder, and this mixture was treated at 600°C for 1 hour in an atmosphere of Ar. 16 g of each of the hydrogen absorbing alloy powders thus obtained was mixed with 4 g of a 3 wt% aqueous solution of PVA to prepare a paste. This paste was uniformly filled into a porous body of foamed nickel having a porosity of 95%, and then pressed into a sheet having a thickness of 0.5-1.0 mm. Finally, the negative electrode was completed by attaching a lead wire thereto. Thereafter, the same procedure as described in Example 1 was repeated.

Examples 8-13 and Comparative Example 11

For 0.92 of R composed of 70% by weight of La and 30% by weight of Ce in which 0 to 30% by weight of Ce was replaced with Pr and/or Nd, Ni, Co, Mn and Al were weighed out so as to give atomic ratios of 3.90, 0.50 (10% of Co based on Ni), 0.30 and 0.30, respectively. These raw materials were melted in the same manner as in Example 1. Thus, there were obtained a series of alloy powders having an average particle diameter of about 50 $\mu$m. Then, 0.5 part by weight of a 1:1 mixture of $Y_2O_3$ and $Er_2O_3$ was added to 100 parts by weight of each alloy powder, and this mixture was treated at 200°C for 1 hour in an atmosphere of Ar and $O_2$ in a volume ratio of 999:1. 16 g of each of the hydrogen absorbing alloy powders thus obtained was mixed with 4 g of a 3 wt% aqueous solution of PVA to prepare a paste. This paste was uniformly filled into a porous body of foamed nickel having a porosity of 95%, and then pressed into a sheet having a thickness of 0.5-1.0 mm. Finally, the negative electrode was completed by attaching a lead wire thereto. Thereafter, the same procedure as described in Example 1 was repeated.

Examples 14-18 and Comparative Examples 12-13

For 0.90 of R composed of 80% by weight of La and 20% by weight of Ce, Ni, Co, Mn and Al were weighed out so as to give atomic ratios represented by the formula $Ni_{4.5-y}Co_yMn_{0.2}Al_{0.3}$ and change the value of y to 0, 0.1, 0.2, 0.4, 0.6, 0.8 or 1.0. These raw materials were melted in the same manner as in Example 1. Thus, there were obtained a series of alloy powders having an average particle diameter of about 40 $\mu$m.

Then, these alloy powders were treated at 300°C for 1 hour in an atmosphere of Ar. 16 g of each of the hydrogen absorbing alloy powders thus obtained was mixed with 4 g of a 3 wt% aqueous solution of PVA to prepare a paste. This paste was uniformly filled into a porous body of foamed nickel having a porosity of 95%, and then pressed into a sheet having a thickness of 0.5-1.0 mm. Finally, the negative electrode was completed by attaching a lead wire thereto. Thereafter, the same procedure as described in Example 1 was repeated.

As can be seen from the results shown in Table 1, when the value of x in $A_xB_5$ was increased from 0.83 to 1.00, there was no significant difference in high-rate discharge capacity. However, the cycle life was reduced when the value of x became 0.98 or greater. The reason for this is considered to be that, since the Co content for replacement of Ni is as low as 0.2 (atomic ratio), the particle size reduction of the alloy proceeds rapidly in a region close to the stoichiometric ratio. This can also be seen from the fact that the retention of particle size was extremely reduced when the value of x became 0.98 or greater.

As can be seen from the results of Examples 1-4 and Comparative Examples 1-8 shown in Table 1, the ordinarily cast alloys had poorer cycle lives as the became B-richer up to a maximum of 0.94, whereas the roll-chilled alloys had better cycle lives as they became B-richer. This is considered to be due to the difference in the degree of segregation occurring in the alloys. Specifically, it is thought that, in the ordinarily cast alloys, the segregation of Mn and Al increased as they became B-richer, and this caused particle size reduction to proceed. In contrast, it is thought that the roll-chilled alloys are less liable to segregation, and the B-richer compositions were effective in suppressing particle size reduction. The segregation of Mn and Al was observed by EPMA.

As can be seen from the results of Examples 5-7 and Comparative Examples 9-10 shown in Table 1, when part of La was replaced with increasing amounts of Ce, the single-electrode capacity was reduced, but the cycle life was improved. This was particularly effective when 10 to 25% by weight of La was replaced with Ce. On the contrary, when the proportion of La replaced with Ce was greater than 30% by weight, not only the single-electrode capacity was reduced, but also the high-rate discharge capacity and the cycle life were reduced.

As can be seen from the results of Examples 8-13 and Comparative Example 11 shown in Table 1, when the La content was kept constant at 70% by weight and part of Ce (with a content of 30% by weight) was replaced with increasing amounts of Pr and/or Nd, an excellent high-rate discharge capacity and a good cycle life were obtained when the Ce content was in the range of 5 to 25% by weight.

On the contrary, when the Ce content was less than 5% by weight or greater than 25% by weight, the cycle life was reduced.

As can be seen from the results of Examples 14-18 and Comparative Examples 12-13 shown in Table 2, investigations were made by varying the atomic ratio of Co from 0 to 1.0 in the composition having composed of 80% by weight of La and 20% by weight of Ce. Consequently, when the atomic ratio of Co was 0.8 or greater, the cycle life was good, but the high-rate discharge capacity and the single-electrode capacity were poor. However, when the atomic ratio of Co was 0.6 or less, not only the cycle life was good, but also the high-rate discharge capacity remained high.

Accordingly, as acceptable hydrogen absorbing alloys, the present invention provides hydrogen absorbing alloys comprising a $LaNi_5$ type intermetallic compound having a stoichiometric ratio represented by the formula $La_{0.83-0.96}Ni_5$, the intermetallic compound being characterized in that 5 to 30% by weight of La is replaced with Ce and with Pr and/or Nd, in that 0 to 12 atomic percent of Ni is replaced with Co, and in that, of the replaced 5 to 30% by weight of La, 5 to 20% by weight of La is replaced with Ce. Moreover, according to the present invention, alloy powders having a long life and excellent high rate discharge property can be obtained by adding a rare earth oxide or the like to the aforesaid alloys in powder form and then heat-treating them.

Table 1

| | Composition of A (wt%) | | | | x in $A_xB_5$ | Casting method | 720 mA discharge capacity | 2,400 mA discharge capacity | Cycle life | Single-electrode capacity | Retention of particle size |
|---|---|---|---|---|---|---|---|---|---|---|---|
| | La | Ce | Pr | Nd | (atomic ratio) | | (mAh) | (mAh) | (No. of cycles) | (mAh/g) | (%) |
| Example 1 | 85 | 15 | 0 | 0 | 0.83 | Rapid roll quenching | 2400 | 1900 | 800 | 273 | 63 |
| Example 2 | 85 | 15 | 0 | 0 | 0.86 | Rapid roll quenching | 2400 | 1900 | 800 | 280 | 60 |
| Example 3 | 85 | 15 | 0 | 0 | 0.90 | Rapid roll quenching | 2400 | 1900 | 800 | 285 | 57 |
| Example 4 | 85 | 15 | 0 | 0 | 0.94 | Rapid roll quenching | 2400 | 1900 | 750 | 300 | 50 |
| Example 5 | 90 | 10 | 0 | 0 | 0.90 | Atomization | 2400 | 1800 | 650 | 290 | 58 |
| Example 6 | 80 | 20 | 0 | 0 | 0.90 | Atomization | 2400 | 1850 | 700 | 285 | 60 |
| Example 7 | 70 | 30 | 0 | 0 | 0.90 | Atomization | 2400 | 1800 | 650 | 280 | 60 |
| Example 8 | 70 | 25 | 5 | 0 | 0.92 | Rapid roll quenching | 2400 | 1800 | 650 | 285 | 60 |
| Example 9 | 70 | 25 | 0 | 5 | 0.92 | Rapid roll quenching | 2400 | 1800 | 650 | 285 | 60 |
| Example 10 | 70 | 20 | 5 | 5 | 0.92 | Rapid roll quenching | 2400 | 1850 | 600 | 288 | 55 |
| Example 11 | 70 | 15 | 10 | 5 | 0.92 | Rapid roll quenching | 2400 | 1900 | 600 | 290 | 55 |
| Example 12 | 70 | 10 | 10 | 10 | 0.92 | Rapid roll quenching | 2400 | 1900 | 600 | 290 | 53 |
| Example 13 | 70 | 5 | 15 | 10 | 0.92 | Rapid roll quenching | 2400 | 1750 | 580 | 292 | 50 |
| Comp. Ex. 1 | 85 | 15 | 0 | 0 | 0.98 | Rapid roll quenching | 2400 | 1800 | 400 | 310 | 25 |
| Comp. Ex. 2 | 85 | 15 | 0 | 0 | 1.00 | Rapid roll quenching | 2400 | 1800 | 250 | 315 | 17 |
| Comp. Ex. 3 | 85 | 15 | 0 | 0 | 0.83 | Ordinary casting | 2400 | 1200 | 250 | 180 | 17 |
| Comp. Ex. 4 | 85 | 15 | 0 | 0 | 0.86 | Ordinary casting | 2400 | 1220 | 250 | 220 | 22 |
| Comp. Ex. 5 | 85 | 15 | 0 | 0 | 0.90 | Ordinary casting | 2400 | 1240 | 270 | 250 | 25 |
| Comp. Ex. 6 | 85 | 15 | 0 | 0 | 0.94 | Ordinary casting | 2400 | 1700 | 480 | 285 | 35 |
| Comp. Ex. 7 | 85 | 15 | 0 | 0 | 0.98 | Ordinary casting | 2400 | 1800 | 400 | 310 | 25 |
| Comp. Ex. 8 | 85 | 15 | 0 | 0 | 1.00 | Ordinary casting | 2400 | 1800 | 300 | 315 | 15 |
| Comp. Ex. 9 | 100 | 0 | 0 | 0 | 0.90 | Atomization | 2400 | 1800 | 300 | 300 | 25 |
| Comp. Ex. 10 | 60 | 40 | 0 | 0 | 0.90 | Atomization | 2400 | 1500 | 550 | 270 | 50 |
| Comp. Ex. 11 | 70 | 0 | 15 | 15 | 0.92 | Rapid roll quenching | 2400 | 1750 | 450 | 300 | 35 |

EP 1 059 684 B1

Table 2

| | Composition of A (wt%) | | x in $A_xB_5$ | Co content | | Casting method | 720 mA discharge capacity | 2,400 mA discharge capacity | Cycle life | Single-electrode capacity | Retention of particle size |
|---|---|---|---|---|---|---|---|---|---|---|---|
| | La | Ce | (atomic ratio) | (atomic ratio to $A_x$) | (atomic percent in B) | | (mAh) | (mAh) | (No. of cycles) | (mAh/g) | (%) |
| Example 14 | 80 | 20 | 0.90 | 0 | 0 | Rapid roll quenching | 2400 | 1900 | 550 | 310 | 45 |
| Example 15 | 80 | 20 | 0.90 | 0.10 | 2.0 | Rapid roll quenching | 2400 | 1900 | 600 | 305 | 45 |
| Example 16 | 80 | 20 | 0.90 | 0.20 | 4.0 | Rapid roll quenching | 2400 | 1900 | 600 | 303 | 50 |
| Example 17 | 80 | 20 | 0.90 | 0.40 | 8.0 | Rapid roll quenching | 2400 | 1900 | 700 | 300 | 60 |
| Example 18 | 80 | 20 | 0.90 | 0.60 | 12.0 | Rapid roll quenching | 2400 | 1800 | 700 | 290 | 65 |
| Comp. Ex. 12 | 80 | 20 | 0.90 | 0.80 | 16.0 | Rapid roll quenching | 2400 | 1450 | 650 | 270 | 65 |
| Comp. Ex. 13 | 80 | 20 | 0.90 | 1.00 | 20.0 | Rapid roll quenching | 2400 | 1400 | 650 | 250 | 65 |

EP 1 059 684 B1

**Claims**

1. A process for the production of a hydrogen absorbing alloy comprising a $LaNi_5$ type intermetallic compound having a stoichiometric ratio represented by the formula

$$R_{0.83\text{-}0.96}Ni_5$$

wherein R is a combination of rare earth elements and contains 70 to 95% by weight of La and 5 to 30% by weight of Ce, and when the sum of La and Ce is less than 100% by weight, R further contains Pr and/or Nd; and the subscript "0.83-0.96" means an atomic ratio of 0.83 to 0.96,
the intermetallic compound being such that part of Ni may be replaced with Co, Mn and/or Al, and when part of Ni is replaced with Co, 12% or less of Ni is replaced with the corresponding atomic ratio of Co,
the process including the step of quenching a molten mixture of constituent metals rapidly to obtain a solidified hydrogen absorbing alloy.

2. A process for the production of a hydrogen absorbing alloy according to claim 1 which further includes the steps of pulverizing the hydrogen absorbing alloy solidified by said rapid quenching, adding a rare earth oxide and/or a rare earth hydroxide to the resulting hydrogen absorbing alloy powder and blending the mixture according to a wet or dry blending technique, and heat-treating the hydrogen absorbing alloy powder at a temperature of 100 to 800°C in an inert atmosphere or in a vacuum.

3. A process for the production of a hydrogen absorbing alloy according to claim 1 wherein the R contains 80 to 95% by weight of La and 5 to 20% by weight of Ce.

4. A process for the production of a hydrogen absorbing alloy according to claim 1 wherein the step of quenching a molten mixture of constituent metals rapidly to obtain a solidified hydrogen absorbing alloy is carried out by a rapid roll quenching method or an atomization method.

5. A process for the production of a hydrogen absorbing alloy according to claim 2 wherein said rare earth oxide and/or said rare earth hydroxide is an oxide and/or hydroxide of rare earth metal selected from Y, La, Ce, Pr, Nd, Gd, Dy, Ho, Er, and Yb.

6. A hydrogen absorbing alloy electrode for a nickel metal-hydride secondary battery which is formed by using the hydrogen absorbing alloy produced according to a process according to any one of claims 1 to 5.

**Patentansprüche**

1. Verfahren zur Herstellung einer Wasserstoff-absorbierenden Legierung, die eine intermetallische Verbindung vom $LaNi_5$-Typ umfaßt, welche ein stöchiometrisches Verhältnis aufweist, das durch die Formel

$$R_{0.83\text{-}0.96}Ni_5$$

dargestellt wird, in der R eine Kombination von Seltenerdmetallen ist und 70 bis 95 Gew.% La und 5 bis 30 Gew.% Ce enthält und R, wenn die Summe von La und Ce kleiner als 100 Gew.% ist, weiter Pr und/oder Nd enthält; und der Index "0,83-0,96" ein Atomverhältnis von 0,83 bis 0,96 bedeutet, wobei die intermetallische Verbindung derart ist, daß ein Teil des Ni durch Co, Mn und/oder Al ersetzt sein kann, und wenn ein Teil des Ni durch Co ersetzt ist, 12% oder weniger des Ni durch das entsprechende Atomverhältnis von Co ersetzt sind,
wobei das Verfahren den Schritt des raschen Abschreckens einer geschmolzenen Mischung der Metallbestandteile einschließt, um eine verfestigte Wasserstoff-absorbierende Legierung zu erhalten.

2. Verfahren zu Herstellung einer Wasserstoff-absorbierenden Legierung nach Anspruch 1, welches weiter die Schritte einschließt: Pulverisieren der durch das rasche Abschrecken verfestigten Wasserstoff-absorbierenden Legierung, Zugabe eines Seltenerdmetalloxids und/oder eines Seltenerdmetallhydroxids zu dem resultierenden Wasserstoff-absorbierenden Legierungspulver und Mischen der Mischung gemäß einer nassen oder trockenen Mischungstechnik und Wärmebehandlung des Wasserstoff-absorbierenden Legierungspulvers bei einer Temperatur von 100 bis 800°C in einer Inertatmosphäre oder in Vakuum.

3.  Verfahren zu Herstellung einer Wasserstoff-absorbierenden Legierung nach Anspruch 1, in welchem R 80 bis 95 Gew.% La und 5 bis 20 Gew.% Ce enthält.

4.  Verfahren zu Herstellung einer Wasserstoff-absorbierenden Legierung nach Anspruch 1, in welchem der Schritt des raschen Abschreckens einer geschmolzenen Mischung der Metallbestandteile zum Erhalt einer verfestigten Wasserstoff-absorbierenden Legierung durch ein rasches Walzen-Abschreckungsverfahren oder ein Zerstäubungsverfahren durch-geführt wird.

5.  Verfahren zu Herstellung einer Wasserstoff-absorbierenden Legierung nach Anspruch 2, in welchem das Seltenerdmetalloxid und/oder das Seltenerdmetallhydroxid ein Oxid und/oder Hydroxid eines Seltenerdmetalls ist, das aus Y, La, Ce, Pr, Nd, Gd, Dy, Ho, Er und Yb ausgewählt ist.

6.  Elektrode aus einer Wasserstoff-absorbierenden Legierung für einen Nickel-Metallhydrid-Akkumulator, der unter Verwendung der Wasserstoff-absorbierenden Legierung gebildet ist, welche nach einem Verfahren gemäß irgendeinem der Ansprüche 1 bis 5 hergestellt ist.

**Revendications**

1.  Procédé pour la production d'un alliage absorbant l'hydrogène comprenant un composé intermétallique de type LaNi$_5$ ayant un rapport stoechiométrique représenté par la formule

$$R_{0,83-0,96}Ni_5$$

dans laquelle R est une combinaison d'éléments de terres rares et contient de 70 à 95 % en poids de La et de 5 à 30 % en poids de Ce et R contient en outre, lorsque la somme de La et de Ce est inférieure à 100 % en poids, Pr et/ou Nd ; et l'indice inférieur "0,83-0,96" indique un rapport atomique de 0,83 à 0,96, le composé intermétallique étant tel qu'une partie de Ni peut être remplacée par Co, Mn et/ou Al et lorsqu'une partie de Ni est remplacée par Co, 12 % ou moins de Ni sont remplacés par le rapport atomique correspondant de Co,
le procédé comprenant l'étape de trempe rapide d'un mélange en fusion de métaux constituants pour obtenir un alliage absorbant l'hydrogène solidifié.

2.  Procédé pour la production d'un alliage absorbant l'hydrogène selon la revendication 1, qui comprend en outre les étapes de pulvérisation de l'alliage absorbant l'hydrogène solidifié par ladite trempe rapide, d'addition d'un oxyde de terres rares et/ou d'un hydroxyde de terres rares à la poudre d'alliage absorbant l'hydrogène résultante et de mélange du mélange selon une technique de mélange par voie humide ou sèche, et de traitement thermique de la poudre d'alliage absorbant l'hydrogène à une température de 100 à 800°C dans une atmosphère inerte ou sous vide.

3.  Procédé pour la production d'un alliage absorbant l'hydrogène selon la revendication 1, dans lequel le R contient de 80 à 95 % en poids de La et de 5 à 20 % en poids de Ce.

4.  Procédé pour la production d'un alliage absorbant l'hydrogène selon la revendication 1, dans lequel l'étape de trempe rapide d'un mélange en fusion de métaux constituants pour obtenir un alliage absorbant l'hydrogène solidifié est réalisée par un procédé de trempe rapide sur rouleau ou par un procédé d'atomisation.

5.  Procédé pour la production d'un alliage absorbant l'hydrogène selon la revendication 2, dans lequel ledit oxyde de terres rares et/ou ledit hydroxyde de terres rares est un oxyde et/ou un hydroxyde de métal de terres rares choisi parmi Y, La, Ce, Pr, Nd, Gd, Dy, Ho, Er et Yb.

6.  Electrode en alliage absorbant l'hydrogène pour un accumulateur secondaire de nickel-hydrure de métal qui est constituée en utilisant l'alliage absorbant l'hydrogène produit selon un procédé selon l'une quelconque des revendications 1 à 5.